## Europäisches Patentamt

## European Patent Office

## Office européen des brevets

(11) Veröffentlichungsnummer: **0 146 496**
**A1**

(12) # EUROPÄISCHE PATENTANMELDUNG

(21) Anmeldenummer: 84810465.9

(22) Anmeldetag: 24.09.84

(51) Int. Cl.⁴: **B 65 G 21/10**, B 65 G 23/24, B 65 B 35/24

(30) Priorität: 24.11.83 CH 6310/83

(43) Veröffentlichungstag der Anmeldung: 26.06.85 Patentblatt 85/26

(84) Benannte Vertragsstaaten: DE FR GB IT NL

(71) Anmelder: **Transver AG, Kantonsstrasse, CH-8852 Altendorf (CH)**

(72) Erfinder: **Neunkirchner, Alfred, Bienenweg 13, CH-8500 Frauenfeld (CH)**

(74) Vertreter: **White, William et al, PATENTANWALTS-BUREAU ISLER AG Postfach 6940 Walchestrasse 23, CH-8023 Zürich (CH)**

(54) **Stetigfördervorrichtung und Verwendung derselben.**

(57) Die Stetigfördervorrichtung ist aus einem Maschinengestell (10) und einer auf diesem entfernbar gehalterten Kassette (20) zusammengesetzt. Im Maschinengestell (10) befinden sich der Antrieb mit Antriebswelle (12) und auf dieser befestigtem Reibrad (13) sowie eine gegen letzteres und gegen eine Antriebswalze (27) in der Kassette (20) mittels Federkraft angepresste Übertragerwalze (14). In der Kassette (20) befindet sich neben der genannten Antriebswalze (27) eine Spannwalze und zwei Umlenkwalzen (24, 25) zur Bestimmung des oberen Trums (29) des die Walzen in der Kassette (20) umschlingenden Fördergurtes (28). Mit dieser Anordnung von Maschinengestell und Kassette kann ein defekter Fördergurt auch durch ungeschultes Personal leicht ausgewechselt werden. Eine Umrüstung auf eine andere Art von Fördergurten kann ebenfalls problemlos geschehen.

Transver AG

Stetigfördervorrichtung und Verwendung derselben

Die vorliegende Erfindung betrifft eine Stetigfördervorrichtung gemäss dem Oberbegriff des unabhängigen Patentanspruchs 1, sowie eine Verwendung derselben gemäss Patentanspruch 5.

Solche Stetigfördervorrichtungen, insbesondere mit einem Transportgurt oder -Band sind bekannt und werden heute in vielen Bereichen der Technik verwendet. Allen diesen Vorrichtungen ist gemeinsam, dass ein unendlicher Transportgurt über Umlenkrollen geführt und mit einem Antrieb gekoppelt ist. Ein solcher Antrieb kann direkt auf eine Umlenkrolle einwirken. Zwei der Umlenkrollen, nämlich eine stromabwärtige und eine stromaufwärtige Rolle bestimmen den oberen Trum des Stetigförderers, auf dem dann das Gut transportiert wird.

Nachteilig an solchen Vorrichtungen ist, dass der Transportgurt z.T. infolge der Biegebeanspruchungen und auch infolge
von Umwelteinflüssen oft schon nach kurzer Zeit Beschädigungen aufweisen kann und ersetzt werden muss.

In der EP-A 47 837 wurde dieses Problem schon aufgedeckt und
es wurde dazu eine Lösung vorgeschlagen, wobei der Antrieb
der einen Umlenkrolle nicht mit fester Verbindung sondern
durch Friktion erfolgen soll. Damit ist es möglich, die Umlenkrollen mit dem Fördergurt zusammen herauszunehmen und den
alten Fördergurt durch einen neuen Fördergurt zu ersetzen.
Die Umlenkrollen sind mittels Kugellager am Gehäuse gelagert.
Es ist aber bekannt, dass solche Fördermittel in Betrieben
verwendet werden, in denen keine Angestellten mit Ausbildung
als Mechaniker beschäftigt werden, wie beispielsweise in Biskuitfabriken oder anderen Betrieben der Lebensmittelindustrie,
und wenn dann Kugellager ausgebaut und wieder eingebaut werden müssen, kann dies schon zu erheblichen Schwierigkeiten
beim Betrieb führen.

Es ist daher eine Aufgabe der Erfindung, eine Stetigfördervorrichtung zu schaffen, bei der ein Auswechseln des Fördergurtes von jeglichem Personal ohne besondere Ausbildung vorgenommen werden kann.

Erfindungsgemäss wird dies durch die Merkmale im kennzeichnenden Teil des unabhängigen Patentanspruchs 1 erreicht. Eine besonders vorteilhafte Verwendung dieses Stetigförderers ist im Patentanspruch 5 gekennzeichnet.

Ausführungsbeispiele der Erfindung werden nachfolgend anhand der Zeichnung erläutert. Es zeigen:

Fig. 1    eine perspektivische Darstellung eines Stetiförderers nach der Erfindung,

Fig. 2    eine Schnittansicht eines Stetigförderers gemäss Fig. 1 in grösserem Massstab zur Erläuterung des Prinzips,

Fig. 3    eine schematische Darstellung einer zweiten Ausführungsform,

Fig. 4    eine schematische Darstellung einer dritten Ausführungsform, und

Fig. 5    eine perspektivische Ansicht einer Anordnung mit drei Stetigförderern, von denen einer herausgehoben ist.

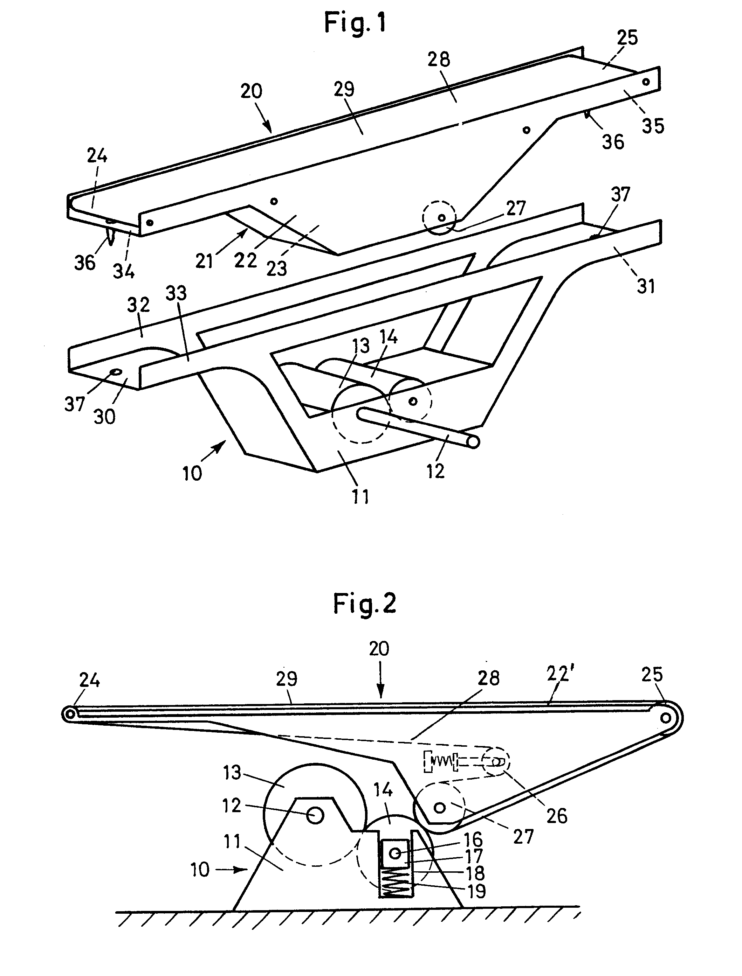

Die Stetigfördervorrichtung gemäss Fig. 1 und 2 besteht aus einem Maschinengestell 10 und einer Kassette 20. Vom Maschinengestell 10 sind nur die für den Betrieb notwendigen Teile eingezeichnet, wie Gestellplatte 11, Antriebswelle 12 mit starr befestigtem Reibrad 13 sowie Uebertragerwalze 14. Diese Uebertragerwalze 14 ist auf einer Welle 16 mit Führungselement 17 drehbar gelagert und dieses Führungselement 17 ist seinerseits in einer schlitzförmigen Ausnehmung 18 zur Ausführung einer translatorischen Bewegung geführt und steht unter der Vorspannung durch eine Schraubenfeder 19. Diese Anordnung ist in Fig. 2 deutlich dargestellt.

Die Kassette 20 weist ein Gehäuse 21 auf, das aus zwei parallelen Gehäuseplatten 22, 23 und oberem Führungstisch 22', mit zwischen den Gehäuseplatten 22, 23 drehbar gelagerten oberen Umlenkwalzen 24, 25 einer Spannwalze 26 und einer Antriebswalze 27 besteht. Der Fördergurt 28 umschlingt sämtliche vier Walzen 24, 25, 26 und 27. Der obere Trum 29 ist zwischen den beiden oberen Umlenkwalzen 24, 25 gespannt.

Maschinengestell 10 und Kassette 20 sind mit ineinander eingreifenden Haltepartien versehen, durch die die gegenseitige Lage genau bestimmt ist. Demgemäss hat das Maschinengestell 10 in Stromrichtung zwei äussere Auflageflächen 30, 31 und Seitenwangen 32, 33 und die Kassette 20 ist mit Stützflächen 34, 35 zur Auflage auf den äusseren Auflageflächen versehen.

Mittels Stifte 36 und Führungsöffnungen 37 wird die genaue gegenseitige Lage bestimmt. Die Stifte 36 können noch zusätzlich Rastkerben oder -Wülste aufweisen und bei den Führungsöffnungen 37 können Rastfedern vorgesehen sein. Da diese Halteelemente in der Technik gut bekannt sind, wurde auf eine weitergehende Beschreibung verzichtet.

Im eingesetzten Zustand der Kassette 20 in das Maschinengestell 10 drückt die Antriebswalze 27 gegen die Uebertragerwalze 14, die damit einen durch die Feder 19 bestimmten Anpressdruck sowohl gegen das Reibrad 13 als auch gegen die Antriebswalze 27 ausübt. Die Umlenkwalzen 24, 25 müssen somit keine bestimmten Abmessungen für die Erzielung einer bestimmten Transportgeschwindigkeit aufweisen, weil der Antrieb anderweitig angeordnet ist. Vorteilhafterweise können Walzen mit kleinerem Durchmesser eingesetzt werden.

Auf diese Weise können defekte Fördergurte 29 ohne jeglichen Montageaufwand und ohne wesentlichen Betriebsunterbruch durch ungeschultes Personal ausgewechselt werden, ohne dass auf den genauen Sitz von Kugellagern oder sonstigen Lager- oder Spannelementen geachtet werden muss. Die Wartungsarbeit kann dann ihrerseits durch qualifiziertes Personal oder durch den Hersteller der Transportanlage mit aller Sorgfalt und ohne Hast ausgeführt werden.

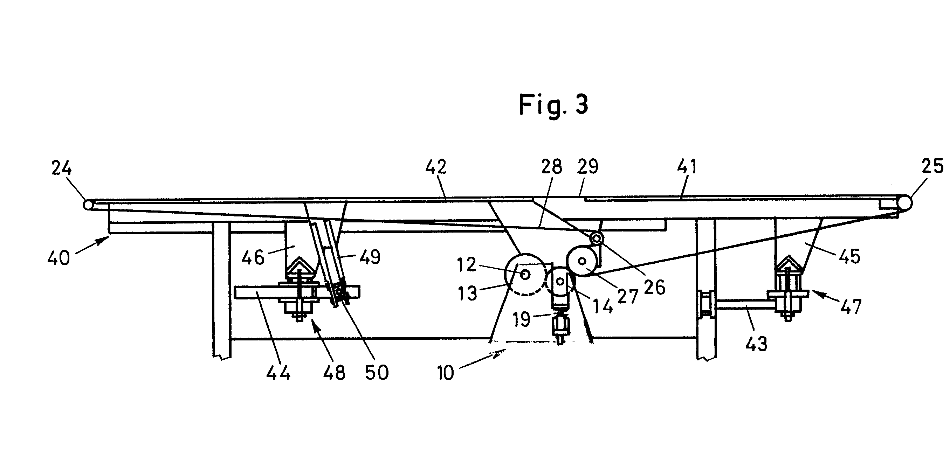

Fig. 3 zeigt eine universell verwendbare Kassette 40 mit längsveränderbarem Führungstisch 41. Gleiche Teile wie in Fig. 1 und 2 sind gleich bezeichnet.

Vom Maschinengestell 10 sind hier lediglich das Reibrad 13 mit zugehöriger Antriebswelle 12 und die Uebertragerwalze 14 mit Federelement 19 dargestellt. Von der Kassette 40 sind die beiden oberen Umlenkwalzen 24, 25, die Antriebswalze 27 und die Spannwalze 26 mit dem Fördergurt 28 dargestellt.

Der in Fig. 2 einstückig dargestellte Fördertisch 22' besteht gemäss dieser Ausführungsform aus zwei Teiltischen 41, 42. Jeder dieser Teiltische 41, 42 ist auf einer Schiene 43, 44 längsverschieblich gehaltert. Die Halterung besteht im wesentlichen aus einer Stütze 45, 46 und einem Klemmteil 47, 48. Während beispielsweise die Schiene 43 gestellfest an der Kassette 40 befestigt ist, ist die Schiene 44 an einer gegenüber der Senkrechten geneigt an der Kassette 40 gehalterten Trägerführung 49, die mit dem Teiltisch 42 einstückig verbunden ist, befestigt. Durch Einstellung des Klemmteils 48 kann dann der Teiltisch 42 zum Teiltisch 41 hin- oder von diesem wegbewegt und gehaltert werden.

Die Trägerführung 49 kann zusammen mit der Halterung 50 ebenfalls verschiebbar angeordnet werden, um dadurch den Teiltisch 42 abschwenken zu können. Mit einer derartigen Anordnung lassen sich eine ganze Anzahl Transportwege voreinstellen, oder mit Stellorganen, wie hydraulische oder pneumatische Zylinder kann der Teiltisch 42 in der Höhe und im Abstand verstellbar ausgebildet werden.

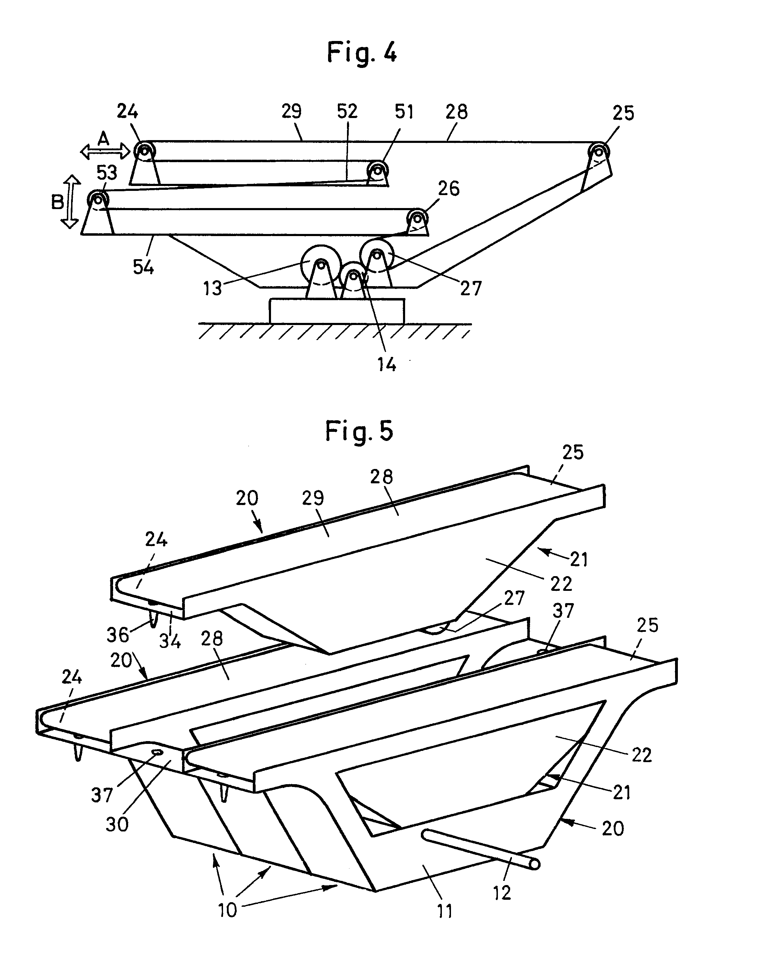

In der Anordnung gemäss Fig. 4 sind zu den oberen Umlenkwalzen 24, 25 für den Fördergurt 28 noch zusätzliche Umlenkwalzen 51,53 vorhanden, um die der Fördergurt 28 ebenfalls geschlungen ist. Damit kann beispielsweise der obere Trum 29 des Fördergurtes 28 in der Länge verändert werden, indem die Umlenkwalzen 24, 51 gemeinsam bewegt werden und zusätzlich kann ein unterer Trum 52 geschwenkt werden, wie die Pfeile A und B zeigen. Die beiden unteren Umlenkwalzen 26, 53 sind zu diesem Zweck auf einem zusätzlichen Führungsteil 54 angeordnet, der dementsprechend kippbar gelagert ist, indem beispielsweise die Umlenkwalze 27 ortsfest angeordnet ist, und das Führungsteil 54 gemäss der Anordnung in Fig. 3 mit Trägerführung 49 und Halterung 50 höhenverstellbar ausgebildet ist.

- 8 -

Es lassen sich auch mehrere Förderausrüstungen kombinieren gemäss Fig. 5. Zusätzlich könnten auch einzelne oder Gruppen von Förderausrüstungen abgewinkelt zueinander angeordnet sein, wenn Förderstrassen aus mehreren Abgabestellen oder zu mehreren Annahmestellen vorzusehen sind. Durch Zwischenschaltung von bekannten Gleichgang-Gelenken in die Wellenabschnitte 12 zwischen den einzelnen Förderausrüstungen kann der Gleichlauf aller Fördergurte gewährleistet werden.

<u>P a t e n t a n s p r ü c h e</u>

.

1.      Stetigfördervorrichtung mit den Transporttrum eines Fördergurtes festlegenden Umlenkelementen, einem Antrieb für den Fördergurt und mit Spannelementen zur Einstellung der Zugspannung im Fördergurt, dadurch gekennzeichnet, dass der Fördergurt (28) und sämtliche Umlenkwalzen (24, 25, 27, 51, 53) zur Führung desselben und Mitttel (26) zur Einstellung der Zugspannung in einer auswechselbar in einem Maschinengestell (10) eingesetzten Kassette (20, 40) untergebracht sind, und dass im Maschinengestell (10) der Antrieb (12, 13) mit dem Uebertragungsorgan (14) und Mittel (30, 31, 35, 36) zur lösbaren Halterung der Kassette (20) vorhanden ist.

2.      Stetigfördervorrichtung nach Patentanspruch 1, dadurch gekennzeichnet, dass die Uebertragungsorgane aus einem auf der Antriebswelle (21) starr befestigten Reibrad (13), einer vom Fördergurt (28) wenigstens teilweise umschlungene Antriebswalze (27) und einer die Verbindung zwischen dem Reibrad (13) und der Antriebswalze (27) herstellende Ueberträgerwalze (14) bestehen.

3.      Stetigfördervorrichtung nach Patentanspruch 2, dadurch gekennzeichnet, dass die Uebertragerwalze (14) im Maschinengestell (10) in Richtung der Winkelhalbierenden zwischen den Verbindungsebenen zwischen der Achse der Antriebswelle (12) und der Achse (16) der Uebertragerwalze (14) einerseits und der Achse der Antriebswalze (27) und der Achse der Uebertragerwalze (14) anderseits federnd vorgespannt ist.

4.      Stetigfördervorrichtung nach Patentanspruch 3, dadurch gekennzeichnet, dass die Achse (16) der Uebertragerwalze (14) in einer nach oben offenen Gabel (18) gelagert ist und dass zur Erzeugung der federnden Vorspannung auf die genannte Achse (16) einwirkende Federn (19) vorhanden sind.

5.      Verwendung der Stetigfördervorrichtung nach Patentanspruch 1 in einer Verpackungsmaschine mit mehreren nebeneinander angeordneten Fördergurte (28) dadurch gekennzeichnet, dass für sämtliche Kassetten (20) ein Antrieb mit einer gemeinsamen Antriebswelle (12) und mit für jede Kassette (20) individuellem Reibrad (13) und mit ebensolcher Uebertragerwalze (14) vorhanden sind (Fig. 5).

6.      Verwendung nach Patentanspruch 5, dadurch gekennzeichnet, dass bei gespreizter Anordnung der Fördergurte, bei jeder Winkeländerung ein Gleichgang-Gelenk in die Antriebswelle (12) eingesetzt ist.

0146496

Fig.1

Fig.2

## Fig. 3

0146496

# Fig. 4

# Fig. 5

**Europäisches Patentamt**

# EUROPÄISCHER RECHERCHENBERICHT

## EINSCHLÄGIGE DOKUMENTE

EP 84810465.9

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | DE - B - 2 161 366 (SOCIETE DES ACIERS FIN)<br><br>* Anspruch 1; Spalte 3, Zeilen 20-29 *<br><br>-- | 1 | B 65 G 21/10<br>B 65 G 23/24<br>B 65 B 35/24 |
| D,A | EP - A2 - 0 047 837 (BOSCH)<br><br>* Anspruch 1 *<br><br>---- | 1 | |

RECHERCHIERTE SACHGEBIETE (Int. Cl.4)

B 65 B
B 65 G

Der vorliegende Recherchenbericht wurde für alle Patentansprüche erstellt.

| Recherchenort | Abschlußdatum der Recherche | Prüfer |
|---|---|---|
| WIEN | 05-02-1985 | BAUMGARTNER |